Europäisches Patentamt

European Patent Office

Office européen des brevets

(11) Publication number: **0 076 950**
**B1**

(12) **EUROPEAN PATENT SPECIFICATION**

(45) Date of publication of patent specification: **07.06.89**

(51) Int. Cl.⁴: **G 06 F 15/20, G 06 F 9/44**

(21) Application number: **82108772.3**

(22) Date of filing: **22.09.82**

(54) Method for combining program diskettes in an interactive text processing system.

(30) Priority: **13.10.81 US 311083**
**13.10.81 US 311113**
**13.10.81 US 311088**
**13.10.81 US 311087**

(43) Date of publication of application:
**20.04.83 Bulletin 83/16**

(45) Publication of the grant of the patent:
**07.06.89 Bulletin 89/23**

(84) Designated Contracting States:
**DE FR GB**

(56) References cited:
**Encyclopedia of Computer Science, A. Ralston et al., 1976, Litton Educational Publishing Inc., USA, p. 777**

**IBM TECHNICAL DISCLOSURE BULLETIN, vol. 23, no. 2, July 1980, NEW YORK (US), A.J. WALKER et al.: "Menu display system", pp. 806-811**

(73) Proprietor: **International Business Machines Corporation**
**Old Orchard Road**
**Armonk, N.Y. 10504 (US)**

(72) Inventor: **Advani, Hira**
**11811 Carshalton Drive**
**Austin Texas 78758 (US)**
Inventor: **Cason, William Charles**
**10902 Cade Circle**
**Austin Texas 78750 (US)**
Inventor: **Hayes, Gerald Edward**
**1334 Neans Drive**
**Austin Texas 78758 (US)**

(74) Representative: **Bonin, Jean-Jacques**
**Compagnie IBM France Département de Propriété Intellectuelle**
**F-06610 La Gaude (FR)**

(56) References cited:
**IBM TECHNICAL DISCLOSURE BULLETIN, vol. 22, no. 8A, January 1980, NEW YORK (US), D.G. BUSCH et al.: "Receiving communications jobs to disk on a dual-diskette machine", pp. 3057-3058**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 076 950 B1**

(58) References cited:

COMMUNICATIONS OF THE ACM, vol. 20, no. 7, July 1977, NEW YORK (US), B.R. SCHNEIDER JR. et al.: "SITAR: An interactive text processing system for small computers", pp. 495-499

ELECTRONIC DESIGN, vol. 28, no. 17, August 16, 1980, ROCHELLE PARK (US), C.A. IRVINE: "ICSD System makes programs protable", pp. 113-118

ELECTRONIC DESIGN, vol. 28, no. 17, August 16, 1980, ROCHELLE PARK (US), SCHWABE et al.: "System simplifies program development for 16-bitters", pp. 97-101

## Description

Technical field of the invention

The invention relates in general to interactive text processing systems and, in particular, to an improved method which reduces the amount of diskette handling required of the operator and assists the operator to interact with the system.

Description of background art

The background art has disclosed a number of interactive text or word processing systems. Generally these systems comprise a display device, a keyboard, a microprocessor, a printer, and one or more diskette drives. The function of the diskette drive is to transfer to the volatile memory of the microprocessor one or more programs which interrelate the various hardware components of the system and which permit one or more text processing applications to be run on the system.

Some systems include a modem device for communicating with other word processing or even data processing systems. Most systems provide the operator with a displayed "menu" from which one or more selections can be indicated by the operator merely by typing a character or symbol on the keyboard and activating an "enter" key. Depending on the character entered into the system, the microprocessor may display a further "menu". The process is repeated until all of the data required by the system to perform a desired text processing task has been entered into the system.

One part of the program which has been entered into the system from the diskette is concerned primarily with establishing the normal interaction of the various components of the system. For example, a subroutine will normally provide for taking the signals represented by a single keystroke and transferring that byte of data to the microprocessor. Another subroutine will cause the character to be displayed on the screen at a location specified by the display cursor. Subroutines and programs which provide such functions are generally referred to as system control programs, whereas the programs that are unique to a particular text processing application, such as the creation of a document, are referred to as application programs.

As basic text processing systems have become more widespread and the number of installations have increased, the ability to economically support new application programs directed to features which enhance the basic program have improved to the point that for most text processing systems that are presently installed, a large number of different feature programs, language dictionaries and options are available and new feature programs and dictionaries become available on a regular basis.

The manner in which these new feature programs are introduced into the marketplace and the manner in which updates to existing programs reflecting corrections are handled, result in an increase in the amount of diskette handling required by the operator and is the cause for concern that errors will occur and efficiency will decrease in proportion to the number of diskettes that are required. In addition, the proliferation of feature diskettes and language dictionary diskettes adds to the level of confusion for the unskilled operator.

The problem originates primarily in the system hardware because most early systems had a diskette drive that operated with a diskette cartridge which recorded on only one side of a disk. Subsequently, diskette drives and cartridges were marketed in which the amount of data stored on one side of the diskette was doubled. More recently, diskette drives and cartridges have been marketed in which both sides of the diskette are recorded at a double density, resulting in a storage capacity approximately four times the capacity of the original diskette.

Since each new feature program is generally separately priced, the industry has found it expedient to record only one feature program on a diskette along with the necessary control program for getting the program into the system to display its various menus, etc, and to interact with the basic text processing program.

The result is that the operator winds up with one diskette for each feature and where the text processing task being run by the operator utilizes a number of these features, considerable time is spent by the operator in changing diskettes. For example, assume in addition to the basic text processing program, the operator is provided with three additional feature programs on three separate diskettes. Assume for example, that one program provides the communication function to be done by the operator interactively with the system. That feature provides the ability to communicate with another terminal specified by the operator. Another diskette contains a program for recording the typed text on magnetic cards which then can be played out on magnetic card typewriters. The third diskette contains the third feature program which allows the operator to establish data processing type files, such as a name and address lists.

If the memory of the microprocessor was capable of storing all the data on the three diskettes, then there would be no major problem. However, this is technically not economical in that volatile memories which operate at the speed of the microprocessors in reading and writing data are currently much too expensive for the amount of data that must be stored. The operator is, therefore, faced with the problem of changing programming diskettes as the various program applications are required in any text processing application that is being run. The problem becomes even more complex when the system has only one diskette drive which must share the work diskette with the program diskette.

EP 0 076 950 B1

## Summary of the invention

The present invention is directed to a method to reduce the amount of diskette handling by the operator by creating one new diskette which combines the programming and other data desired by the operator from a number of separate diskettes.

The method as claimed involves displaying to the operator a menu which reflects all processing tasks that the system is capable of performing. The menu is displayed as a result of reading an IPL program into the system along with a "combine" program which displays the menu and which guides the operator through a series of diskette insertions and removals. Depending on the various processing tasks that the operator selects from the menu, programs are transferred to a two-sided, double-density (2S2D) destination diskette from a one-sided, single-density (1S1D) source diskette. In addition to transferring the specific task programs from the various source diskettes to the destination diskette, information that had previously been entered into the system by the operator and stored on the individual source diskettes, for example, format and setup information for certain type documents may also be transferred to the 2S2D destination diskette from the 1S1D source diskettes.

The number of diskette changes required by an operator of an interactive text processing system using a combined program diskette is reduced considerably.

As will be understood by persons familiar with the systems that operate from computer programs, it is not uncommon for a program that has been released to customers to be updated at some subsequent time. The reasons for these updated versions include correcting minor errors, providing improved performance, and increased function. When a new version of a program for an interactive text processing system is provided, the operator will generally substitute the new diskette and discard the earlier version after transferring any setup or other information that has been stored on the earlier version to the new version. However, a problem exists when a program that has been updated has the original version stored on a combined program 2S2D diskette. The operator must then create a new combined program diskette each time one of the programs is updated. This problem is further complicated when the original 1S1D program diskettes included individual programs which could be transferred to the combined program diskette such as occurs with the spelling check programs in various languages. The updated version of the spelling check program diskette, when distributed, will not necessarily identify what specific program was updated. As a result, the necessity of creating a new combined diskette depends on whether the part of the updated program is stored on the 2S2D combined diskette. The creation of a new combined program diskette that is precisely the same as the previous one except for the update to the one program which prompted the release of the update will be a very tedious task if all of the various steps have to be repeated since the combined program diskette includes setup information, supplementary dictionaries, etc. for which no current audit trail exists as to the source diskettes.

The present invention as claimed in Claim 1 avoids those problems by providing a method whereby the interactive text processing system may interactively update the combined program diskette directly from the 1S1D diskette containing the updated program.

While the 2S2D combined program/work diskette described above solves the problem of the operator spending time changing diskettes, it only has the capability of displaying to the operator menus which existed on the individual 1S1D diskettes and which menus were transferred to the 2S2D diskette. The operator must, therefore, remember what features and language dictionaries were originally transferred to the 2S2D combined program/work diskette. If the operator is not familiar with the diskette, a trial and error approach using prompts and the existing menus may be employed, but this involves considerable operator time and expertise in interpreting the responses that the system will provide when a request is made for a particular task where none exists on the diskette which has been used to IPL the system.

The present invention is directed to a method to avoid the above problem. The method involves displaying to the operator one or more menus which reflect to the operator those feature tasks and language dictionaries that exist on the combined program diskette and are presented as separate selectable options by newly developed menus so that the corresponding programs may be transferred from the combined program diskette into the system, permitting the selected feature tasks to be executed under the direction of the operator.

The new menus which are unique to the specific 2S2D combined program/work diskette are displayed with the appropriate options because they are dynamically created by a subroutine which employs identifying data on each transferred program to select the appropriate literal text to be displayed from a table of all possible text options.

While the combination of several text processing task programs on a single 2S2D program/work diskette reduces the time the operator would spend inserting and removing 1S1D diskettes during a series of processing tasks, a situation will develop where it is necessary to perform text processing tasks that are not on the 2S2D combined program/work diskette. Even where the system is provided with the dynamically created menus, these menus merely reflect the feature programs that have been transferred to the 2S2D diskette, but do not reflect those feature programs that the system is capable of performing and which exist in the installation on 1S1D diskettes. The operator, unless provided with an appropriate guidance when a situation of this type is encountered, may conclude that the only solution would be to create a new combined program diskette having the missing feature program recorded thereon. To avoid having many combined program/work diskettes which differ by only one infrequently used feature program, the present

EP 0 076 950 B1

system is arranged so that the operator is provided with an option on a menu which permits the system to be advised that a task is desired that is not on the combined program/work diskette. The system can then present the operator the correct sequence of steps which must be followed to perform that text processing task.

It is, therefore, an object of the present invention to reduce the number of diskette changes required by an operator of an interactive text processing system during use of the system.

The present invention provides a method for the operator of an interactive text processing system to combine programs on one diskette, selected from word processing tasks and feature programs which are stored on a plurality of different diskettes.

It provides further a method for interactive text processing system to update a combined program diskette directly from a program disk containing an updated version of a program stored on the combined programming diskette.

It provides further an improved method for displaying to the operator of an interactive text processing system a menu which lists only specific tasks whose program sets are stored on a combined program/work diskette.

The present invention provides further an improved method for an operator to interactively enter task selection data into an interactive text processing system in which a combined program/work diskette is a source of programs for performing a plurality of different text processing tasks.

It provides further an improved method to assist the operator of an interactive text processing system to select text processing tasks.

The present invention provides further an improved task selection process for the operator of an interactive text processing system employing a combined program/work diskette by providing a series of instructions to the operator of an interactive text processing system to enable the operator to perform a text processing task that is not included on a combined program/work diskette.

The foregoing and other objects, features and advantages of the present invention will be apparent from the following more particular description of a preferred embodiment of the invention as illustrated in the accompanying drawings.

Brief description of the drawings

Fig. 1 is a functional block diagram of an interactive text processing system in which the method of the present invention may be employed;

Fig. 2 is a table illustrating the general layout of diskettes employed in the system shown in Fig. 1;

Fig. 3 illustrates the format of track 0 of the diskette shown in Fig. 2;

Fig. 4 illustrates the volume table of contents (VTOC) for a typical combine diskette employed in the system of Fig. 1;

Fig. 5 illustrates a data set directory for a program stored on the diskette;

Fig. 6 is a chart illustrating the program architecture for the program being run by the microprocessor.

Fig. 7 is a flow chart illustrating the steps involved in the program being run by the microprocessor to update the combine program on the 2S2D diskette.

Description of an embodiment of the invention

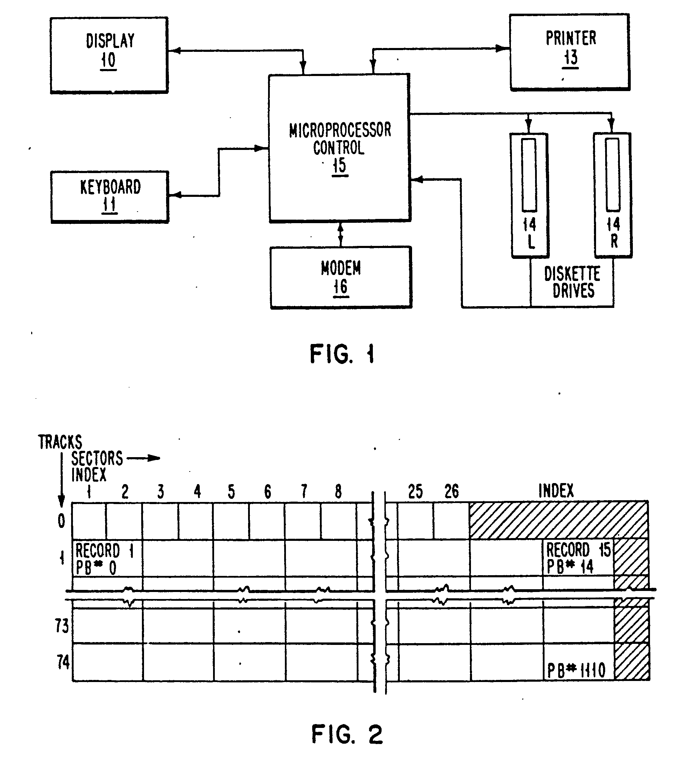

With reference to Fig. 1, a typical interactive text processing system is illustrated in which the method of the present invention is advantageously employed. The major components of the system shown in Fig. 1 comprise the display device 10, the keyboard 11, the printer 13, the diskette storage devices 14L and 14R, and the microprocessor 15 which includes an internal memory for storing programs and data entered from the keyboard 11 or from the diskette storage devices 14L and 14R. Device 14 functions to store data on either a single-sided diskette at density D1 only or to store data on a two-sided diskette at double density D2. The 2S2D diskette, therefore, can store approximately four times the information stored on the 1S1D diskette. A modem 16 is also shown in Fig. 1 and functions to permit the system to communicate with other similar text processing systems or to a data processing system.

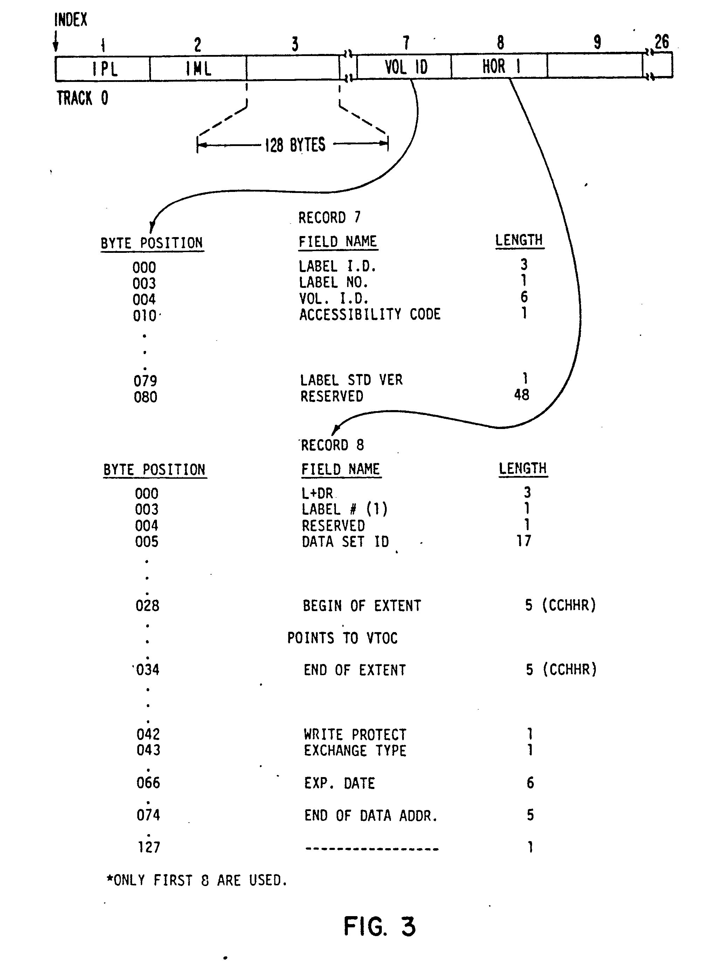

The general format on both types of diskettes is standard for a given system manufacturer to insure data interchange among like systems and is shown in Fig. 2. The IBM Standard for Word Processing Diskettes published by the IBM Corporation, Armonk, New York under the title Diskette 1, 2 and 2D OEMI Manual, publication number G—A—21-9388, provides a very detailed description of the format. According to that standard, each diskette is provided with tracks labelled 0 through 74. Tracks 1 through 74 are available for user data. Track 0 is reserved for system use, while two tracks, 75 and 76, are available as alternates and normally are not used. As shown in Fig. 2, physical records 1 and 2 of track 0, corresponding to sectors 1 and 2, are reserved for the Initial Program Load (IPL) and the Initial Microcode Load (IML) functions. Record 7 on track 0 is the volume 1 label, while records 8—26 are reserved for data set header labels. All sectors on track 0 are 128 byte sectors. Record 8 is a standard header label and, as shown in Fig. 3, includes bytes 28—32 representing a 5-character field defining the beginning address of the volume table of contents (VTOC). The beginning address field is formatted as a 2-byte cylinder field, a 2-byte head number, and a 1-byte record number referred to generally in the art as the CCHHR addresses. The end of VTOC is defined by another 5-character field CCHHR in bytes 34 through 38 of record 8 of track 0. The format of track 0 is the accepted standard for diskettes.

5

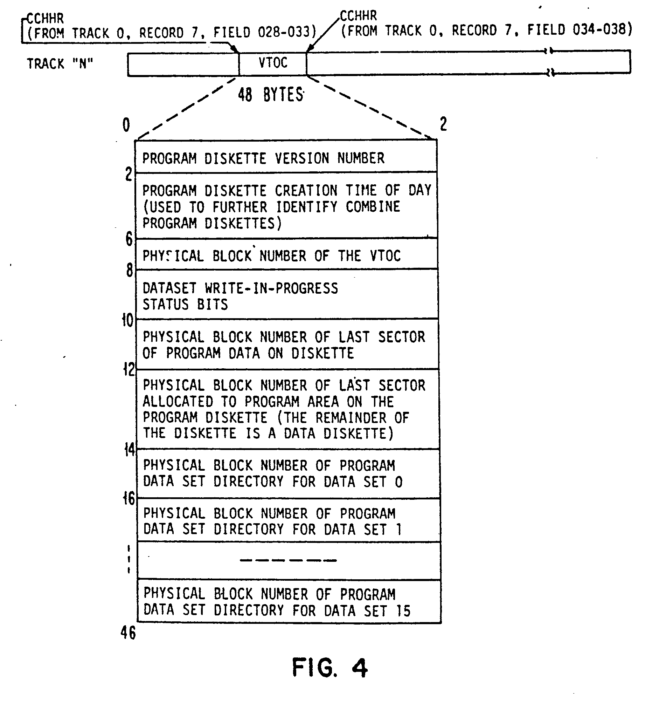

The volume table of contents VTOC is constructed by the using system and, in this instance, is a table similar to Fig. 4 which contain a 2-byte pointer to the start of the storage location of each of 16 data set directories. The VTOC table also includes other relevant data about the diskette. As is conventional, the 2-byte pointer in VTOC to each data set directory is based on a physical block number PBN which is assigned sequentially to sectors beginning at track 1, sector 1 (physical block 0) through track 74, sector 15 (physical block 1110), as shown in Fig. 2. All sectors on tracks 1—74 are 256 bytes.

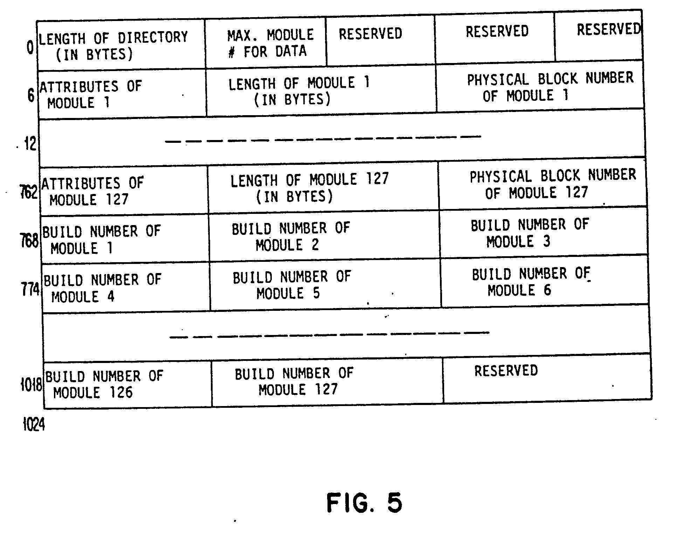

Fig. 5 illustrates the format of a data set directory. Each directory includes a 2-byte physical block number pointer to each program module assigned to the data set. A data set is, therefore, just a collection of related program modules, which collection does not exceed 127 modules. The programs stored on the diskettes are divided among 16 different data sets where each data set represents a particular program function so that each module assigned to that data set performs a similar program function. Some modules contain tables of data as distinguished from instructions.

The system, as shown in Fig. 1, is activated by the operator turning on the power and inserting a basic text processing program diskette into one of the diskette drives 14L or 14R. The basic program diskette is an 1S1D type diskette and, since an 1S1D type diskette can be read by either device, either device may be used. The system automatically reads the appropriate sector of track 0 to initialize the system. This involves reading into the memory of the microprocessor the IPL program and programs for displaying menus and programs for causing the system to perform the tasks indicated by the menus or for directing the operator to other diskettes when the programs to accomplish the selected tasks are not on the operating diskette. After the system has been initialized, a task selection menu is displayed to the operator on display device 13 similar to the following.

```
PRODSK                                                    Kyb 1
_____ _____ _____ _____ _____ _____

                          TASK SELECTION
                                                              _____

        ID    ITEM
        _____

        a     Typing Tasks:
                 Create, Revise or Paginate Documents
        b     Work Diskette Tasks:
                 Delete or Duplicate Documents, Files, or Setups
                 Duplicate, Condense, or Erase/Initialize (Name Diskette
                 Print Index of Diskette Contents,
                 Change Document or Diskette Name,
                 Recover Documents, Files and Setups
        c     Program Diskette Task:
                 Default Formats, Duplicate Setups and Spelling Supplement
                 Printer and Workstation Description,
                 Duplicate and Erase Program Diskette
                 Feature Program Diskette Tasks
                 Create and Update Combined Program Diskette
        d     Spelling Tasks
        e     Feature Tasks
        f     Merge Tasks
     (Instruction Line)
     Type ID letter to choose ITEM; press ENTER:
     (Message Line)


                              MENU 1
```

The top line of the menu contains a number of fields. The first field, for example, defines the name of the diskette, while other fields will be used to portray to the operator conditions of the system. The bottom three lines of the menu are an instruction line, a prompt line, and a message line respectively, which function as their names imply.

The tasks available to the operator and performed by the system, as shown in Menu 1, will now be described in a general sense to provide a basis for understanding the operation of the present system using 1S1D diskettes. Prior to such description, it should be recognized that the operator has available a number of diskettes. One group of diskettes will be program diskettes, a second group will be work diskettes, and a third group will be new blank diskettes which are blank except for the initialization information and formatting data that was recorded on the diskette at the factory.

Further, if the system has only one diskette drive which only operates with a 1S1D type diskette, all of the diskettes referred to above will be of the same density type, namely, 1S1D.

If, however, the system includes a 14L and a 14R 2S2D type diskette drive, then the operator will probably have two types of diskettes, i.e., a single and double density diskettes.

In addition, it should be understood that the operator will have two different types of program disks. One type of program disk is to the basic set of tasks that the system performs, while the other type of program disks are to specific features. It should be understood that only the basic program diskette has its own IPL program so that the operator may not insert a feature program diskette directly when the feature task is to be performed. The main program, however, will prompt the operator to insert and remove the feature diskette at the appropriate time in accordance with the interactive entry of data into the system in accordance with selected menu options.

The tasks that the operator may select are displayed on the display device as a result of the IPL operation. The function of these tasks are as follows:

Typing task

This task is primarily concerned with the creation, revision or reformatting of documents that have been entered into the system. If the operator selects the typing tasks option in the task selection menu, then the typing task program set is loaded into the system from the diskette. If the appropriate program diskette has been taken out or is not in the work station diskette drive when this menu is displayed and the option selected, the system will display a message to the operator on the prompt line advising the operator to insert the particular diskette. After the typing task program set is loaded, the typing task selection menu is displayed, which resembles the following menu.

DSK001                                                                    Kyb 1

TYPING TASKS

ID    ITEM

a     Create Document
b     Revise Document
c     Paginate Document
d     Paginate, Hyphenate, Spell Check Document

e     Go to Task Selection

When finished with this menu, press ENTER.
Type ID letter to choose ITEM; press ENTER:
(Message Line)

MENU 2

Depending on the operator's response to this menu, a message to insert an appropriate work diskette will be displayed.

Work Diskette Tasks

A work diskette task is primarily directed to the maintenance of work diskettes and their contents. A work diskette is a diskette on which documents are stored, for example. If the operator selects the work diskette task option in the task selection menu (Menu 1), the work diskette task program set is loaded into the system. As before, if the program diskette has been removed from the system, the system will prompt the operator to reinsert the program diskette. After the work diskette task program set has been loaded, the following menu is presented to the operator.

DSK001                                                    Kyb 1

## WORK DISKETTE TASKS

ID   ITEM

a    Delete Document
b    Duplicate Document
c    Change Document Name

d    Change Diskette Name
e    Duplicate Diskette
f    Condense Diskette
g    Erase or Initialize (Name) Diskette
h    Recover Documents
i    Print Index of Diskette Contents

j    Go to Task Selection

(Instruction line)
(Prompt line)
(Message line)

### MENU 3

Program Diskette Tasks

When the program diskette task option is selected on Menu 1, the system response will be to prompt the operator to insert the appropriate program diskette. After the diskette is inserted, it is checked to insure it has the correct maintenance level, manu language, etc. If the check is satisfied, the program diskette task program set is loaded into the system. This set of tasks is directed primarily to maintenance of program diskettes and their contents. When the program diskette tasks selection set has been loaded into the system, a program diskette task selection menu such as the one shown below is displayed to the operator.

PRODSK                                                   Kyb 1

### TEXTPACK PROGRAM DISKETTE TASKS

ID   ITEM

a    Change Document Format Defaults
b    Change Alternate Format Defaults
c    Change Printer Description
d    Change Work Station Description

e    Duplicate Machine Setup
f    Duplicate Program Diskette
g    Erase Program Diskette
h    Duplicate Spelling Supplement
i    Change Arithmetic Format Defaults
j    Create New Combined Program Diskette
k    Update Combined Program Diskette

l    Go to Task Selection

When finished with this menu, press ENTER.
Type ID letter to choose ITEM; press ENTER:
(Message Line)

### MENU 4

If a feature program diskette is loaded, then the specific program diskette task selection menu on that feature diskette is displayed after the feature program task set is transferred into the system. The menu details will depend on the feature.

Spelling Tasks

If the operator selects the spelling tasks option from the task selection menu (Menu 1), the spelling tasks program set is loaded into the system. As before, a message will be provided to the operator if the program diskette had been removed. The primary function of the spelling task is to check the spelling of words in a document. After the program set has been loaded into the system, the spelling task selection menu shown below is displayed to the operator.

DSK001                                                                Kyb 1

SPELLING TASKS

ID    ITEM

a     Check Document

b     Load Supplement
c     Clear Supplement
d     Store Supplement on Program Diskette

e     Choose Spelling Language Dictionary

f     Paginate, Hyphenate, Spell Check Document

g     Go to Task Selection

When finished with this menu, press ENTER.
Type ID letter to choose ITEM; press ENTER:
(Message Line)

MENU 5

Feature Tasks

The function of the feature tasks option is to provide a mechanism whereby the operator may select certain specific operations to be performed in the system. Each of these operations will be on a separately distributed feature diskette and, hence, the response to the operator selecting the feature task option on the task selection menu (Menu 1) will always be to insert the appropriate feature diskette. After feature program diskette has been loaded, it is checked to insure that it has the correct maintenance level and menu languages. The specific feature task selection menu on that feature diskette is displayed after the feature program task set is transferred to the system. The menu will depend on the specific feature.

The above description of the insertion and removal of diskettes is merely an example of the type of problems that the present invention is directed to. It will be appreciated that as new features are added to the system where each is on a separate 1S1D diskette, considerable time can be wasted changing from one program diskette to another. This is especially true in systems where only one diskette drive is employed and the program diskette cannot be used as a work diskette also.

It should also be understood that, for a number of reasons, the basic text processing program might have four or five different capability levels, where each level offers the user more basic functions than the previous level. The decision to package a new function as another version or level of the basic program or as a separate feature will depend more on marketing criteria than on technical considerations.

Since the device 14 can read both 1S1D and 2S2D diskettes, considerable improvement in the throughput of the system will be obtained by transferring those individual feature programs that are used most often by the operator from the feature 1S1D diskettes to the 2S2D diskette along with the basic program so that the system can be initialized from the combined 2S2D diskette and the desired subset of tasks and functions can be accomplished without changing diskettes as the tasks are completed.

In the following description of the preferred embodiment of the improved method, the various programs are combined onto the 2S2D destination diskette in accordance with a "Combine" program that is entered into the system from a 1S1D source diskette which, in practice, has been packaged as part of the highest version of the basic program. This program guides the operator interactively through a sequence of menus from which selections are made, and also prompts the operator to insert and remove specifically identified 1S1D diskettes at the appropriate time so that task program sets corresponding to the tasks selected from the displayed menus will be transferred to the 2S2D destination diskette and so that the appropriate housekeeping data will also be generated by the system and stored on the 2S2D diskette so as to permit the transferred programs to be subsequently selected and entered into the system from the single 2S2D combined program diskette.

The 2S2D combined program diskette also will be used as a work diskette since, from a practical standpoint, the subset of selected task programs for a given text processing application does, in most situations, leave considerable amount of working storage space on the 2S2D combined diskette.

9

# EP 0 076 950 B1

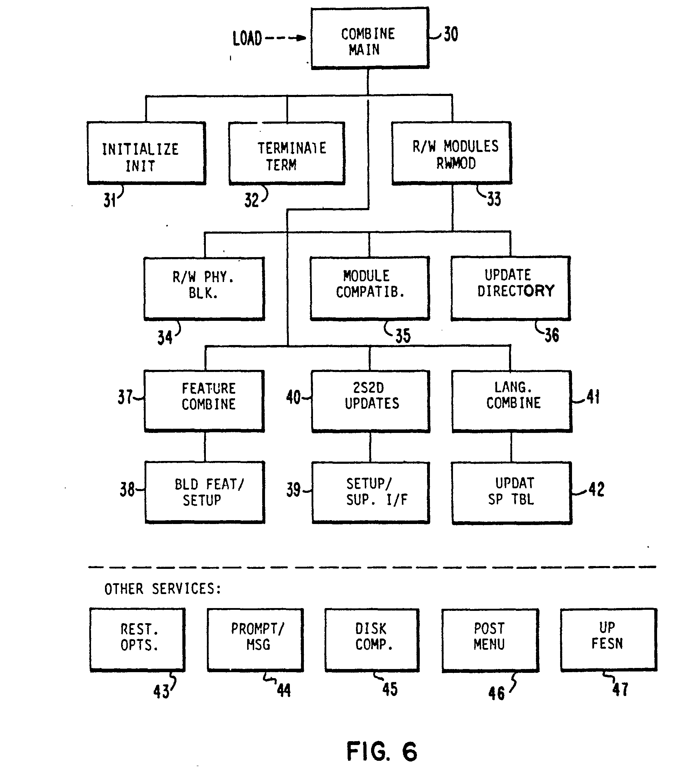

Fig. 6 illustrates the various subroutines of the "Combine" program. The "Combine" main subroutine 30 functions to control the flow of operations between the system program and the various subroutines associated with the "Combine" program. The "Combine" program is executed by the system while the textpack or basic program diskette task selection menu is displayed. A copy of the menu follows.

PRODSK                                                                Kyb 1

## TEXTPACK PROGRAM DISKETTE TASKS

| ID | ITEM |
|----|------|
| a | Change Document Format Defaults |
| b | Change Alternate Format Defaults |
| c | Change Printer Description |
| d | Change Work Station Description |
| e | Duplicate Machine Setup |
| f | Duplicate Program Diskette |
| g | Erase Program Diskette |
| h | Duplicate Spelling Supplement |
| i | Change Arithmetic Format Defaults |
| j | Create New Combined Program Diskette |
| k | Update Combined Program Diskette |
| l | Go to Task Selection |

When finished with this menu, press ENTER.
Type ID letter to choose ITEM; press ENTER:
(Message Line)

### MENU 4

When the operator selects option j from the menu, the "Combine" program is read in the system branches to the "Combine" program. The overall function of the "Combine" program is to first make a logical copy on the 2S2D diskette of all of the programs that reside on the basic program diskette, which may include two diskettes, then transfer programs from selected 1S1D feature diskettes to the 2S2D diskette, then selected language programs from the language diskettes. The term "logical copy" implies a copy of the contents from the source diskette to the destination diskette, but not necessarily to the same phyical location or logical address.

Some of the tasks that are executed by the initialize subroutine 31 includes the establishment of various work buffers in RAM, the assignment of memory for control blocks, and the establishment of the volume table of contents VTOC for the destination diskette. The functional block 32, "Terminate", performs certain functions at the close of the "Combine" program which converts the destination diskette into a valid program diskette. Some of these functions include the storing of the VTOC table as it has been built up in memory on the destination diskette and the transfer of various tables which were built in memory reflecting the various programming modules that have been transferred from the source diskettes to the destination diskette, which are generally referred to as housekeeping tasks.

The next block 33 of the "Combine" program is the R/W module whose function is to control the transfer of program data as stored on the source diskettes into memory and the subsequent transfer of program data from the memory to the destination diskette.

The R/W physical block subroutine 34 functions to write or read addressed physical blocks of the source and destination diskettes.

The block 35 labelled "compatible" determines when a program module on a source diskette is to replace a similar program module on a destination diskette. This subroutine is employed to insure that the lastest version of the module, i.e., highest build number, is recorded.

The subroutine functional block 36 labelled "update directory" functions to update a destination data set directory as modules are being transferred from the source diskette to the destination diskette.

The "feature combine" functional block 37 subroutines function to display to the operator features that may be combined and also to control the transfer of the feature programs from the 1S1D source diskettes to the 2S2D destination diskette.

The "Build feature/setup" subroutine 38 operates in connection with the "feature combine" subroutine to update various tables in memory which will eventually be transferred to the destination diskette.

The "2S2D update" subroutine 40 shown in Fig. 6 is not employed in the create combine task. It is the subroutine employed in connection with the update of setups, language supplements, and other data subroutine 39 from the update task which is option k of menu 4.

10

The "language combine" routine 41 functions to present to the operator menus which solicit requests for languages to be transferred and their source.

The "update spelling table" subroutine 42 transfers a selected language module from the source diskette to the destination diskette and updates a table in memory (and, subsequently, on the combined program diskette) which will be used to indicate what language dictionaries are on the combined program diskette.

A number of other subroutines (43—47) are shown in Fig. 6, and are employed in the process of combining programs. These are generally referred to as the "other service" programs.

The "Combine" program proceeds in a sequential fashion to transfer programs to the 2S2D diskette in the following order:

1. The basic text processing program is transferred to the 2S2D diskette as a logical copy.

2. The feature programs are transferred from separate feature diskettes in accordance with the features that have been selected by the operator.

3. The selected language programs and associated dictionaries are transferred to the 2S2D diskette in accordance with the particular languages selected by the operator.

The transfer of the basic text processing programs from the 1S1D source diskette to the 2S2D destination diskette is, in essence, a transfer of all program modules from one diskette to the other. A program module comprises 31 control sections (C-sets), each of which is represented by a 5-bit number. A 7-bit module index identifies each module, while a 4-bit data set identifier identifies one of 16 separate data sets. The basic program unit that can be transferred between a source diskette and a destination diskette is a module. The transfer process, therefore, involves identifying on the source diskette those modules that comprise the programs for the task set selected by the operator.

Since the "Combine" program per se is part of the basic program package which is represented by two 1S1D diskettes, all of these program modules are, in effect, merely transferred onto the 2S2D destination diskette from each of the 1S1D diskettes. The data set directories that were set up on basic program diskettes are not transferred to the "Combine" destination diskette at this time, but are maintained in memory until all the desired 1S1D diskettes have been transferred to the 2S2D diskette. In addition, all of the modules represented in the data set directories will also be recorded on the destination diskette, and their new locations will be placed in the appropriate data set directory.

A data set directory is only established if there is a data set to be recorded on the diskette. In other words, there is not necessarily 16 data set directories on each diskette since the programming modules which comprise the basic programs may not require the establishing of 16 separate data sets. More likely, only half that number of data set directories would have been established for the programming modules for the basic tasks. Further, it should be understood that in each established data set directory, the allocation of modules to the directory results in a very sparsely populated directory in that perhaps only ten of the possible 127 module directory positions in any data set will be occupied by the programs for the basic text processing tasks.

The following table represents a hypothetical distribution of program modules among data sets for the basic text processing programs, the feature programs, and the eight language dictionaries.

TABLE 1

| Data sets | 0 | 1 | 2 | 3 | 4 | 5 | ... | 13 | 14 | 15 |
|---|---|---|---|---|---|---|---|---|---|---|
| Programs | | | | | | | | | | |
| Basic | 6 | | | 9 | 10 | | | 11 | 18 | 7 |
| Feature 1 | 3 | | 5 | 10 | | 4 | | 2 | | 1 |
| Feature 2 | 3 | | 12 | 4 | | 4 | | 2 | | 1 |
| Feature 3 | 3 | 8 | | 2 | | | | 4 | | 12 |
| . | | | | | | | | | | |
| . | | | | | | | | | | |
| . | | | | | | | | | | |
| Language 1 | 1 | 2 | 4 | | 8 | 2 | | | 10 | — |
| . | | | | | | | | | | |
| . | | | | | | | | | | |
| . | | | | | | | | | | |
| Language 8 | 3 | | 5 | 2 | 7 | 2 | | | | — |

After the basic or text pack programs have been transferred to the 2S2D diskette, the feature programs which have been selected by the operator will then be transferred. Since each feature program is on a separate 1S1D diskette, all of the programming modules that are recorded on that feature diskette will be transferred to the 2S2D diskette. However, the transfer process is slightly different than that previously employed in making the logical copy of the basic programs. In transferring feature program modules to the 2S2D diskette, those modules assigned to the first data set directory on the feature diskette are transferred first. Where a corresponding directory already exists in memory, that directory is updated. When none exists, the next free space on the diskette is preallocated for that data set directory and the modules for that data set are then transferred and recorded after the preallocated space.

The process described above is repeated for each of the features which has been selected.

The next major step in the combine process involves the transfer of selected language pack dictionaries from the language pack program diskettes to the 2S2D diskette. This transfer process is again slightly different than the logical copy process involved with the basic program modules or the feature program modules. The difference lies in the fact that only those programming modules associated with the selected language dictionary will be transferred from a given diskette. The selection process is established by the operator selecting a particular language from the language selection menu which, in effect, establishes a list of control sections and associated modules that are involved with the selected language dictionary. These modules associated with the selected language dictionary are then transferred in data set sequence to the 2S2D diskette and sequentially recorded, with the respective data set directories being updated as each module is transferred. Again, if the destination diskette does not include the required data set directory because a given programming module has a unique data set number, then space for a new directory is allocated on the 2S2D diskette and is immediately followed by the respective program modules assigned to that unique data set. That process is repeated for each language that is selected.

After the last data has been transferred, the "terminate" section 32 (Fig. 6) of the "Combine" program transfers the directories from the system memory to the 2S2D diskette and other predefined tables to permit the 2S2D diskette to be recognized by the system as a valid program disk.

The method by which the 2S2D "Combine" diskette can subsequently be updated to reflect a change that has been made to one or more programming modules of a program that was previously distributed will now be described.

It is assumed for purposes of the following description, that the operator has been operating the system with a 2S2D combined program diskette that was created in accordance with the method previously described and that that programming diskette was also employed as a work diskette.

It is further assumed that the operator has also received an updated copy of a feature program on a 1S1D diskette and that the operator wants to update the corresponding feature program on the 2S2D combined programming/work diskette. ·

The combined 2S2D diskette is initially inserted into device 14L and the basic or textpack program diskette task menu is displayed as shown below in response to the operator having selected the program diskette task option from the task selection menu (Menu 1) and subsequently, textpack program diskette task option from the program diskette task menu which will be shown hereafter.

PRODSK                                                                     Kyb 1
_____  _____  _____  _____  _____  _____  _____

TEXTPACK PROGRAM DISKETTE TASKS

ID     ITEM
_____

a     Change Document Format Defaults
b     Change Alternate Format Defaults
c     Change Printer Description
d     Change Work Station Description

e     Duplicate Machine Setup
f     Duplicate Program Diskette
g     Erase Program Diskette
h     Duplicate Spelling Supplement
i     Change Arithmetic Format Defaults
j     Create New Combined Program Diskette
k     Update Combined Program Diskette

l     Go to Task Selection

When finished with this menu, press ENTER.
Type ID letter to choose ITEM; press ENTER.
(Message Line)

MENU 4

When the operator selects option k from the menu, the "Up-date" program is read in and the system branches to the "Update" program. The overall function of the "Update" program is to make a copy of the 2S2D combined program diskette on a new 2S2D diskette except for the program modules which correspond to the updated modules on the 1S1D diskette. These modules replace the old modules on the new 2S2D diskette.

The "Update" program which, in the preferred embodiment, is part of the "Combine" program, guides the operator through the removal and insertion of the three diskettes involved at the appropriate times in accordance with the operator's response to displayed menu options so that, at the completion of the process, a new 2S2D combined program/work diskette exists which is logically identical to the original 2S2D combined program/work diskette except for certain program modules which were modified to reflect the changes present on the newly distributed 1S1D feature program diskette.

The process of creating the new combined 2S2D program/work diskette from the old combined 2S2D program/work diskette and the 1S1D updated feature diskette also functions to record all the program modules associated with the data set immediately following the data set directory and to also record all of the data set directories in a sequential fashion. Therefore, when a sequence of modules are loaded from a data set on the 2S2D combined program diskette, the loading process requires less time since substantially all of the modules will be transferred with a continuous read operation.

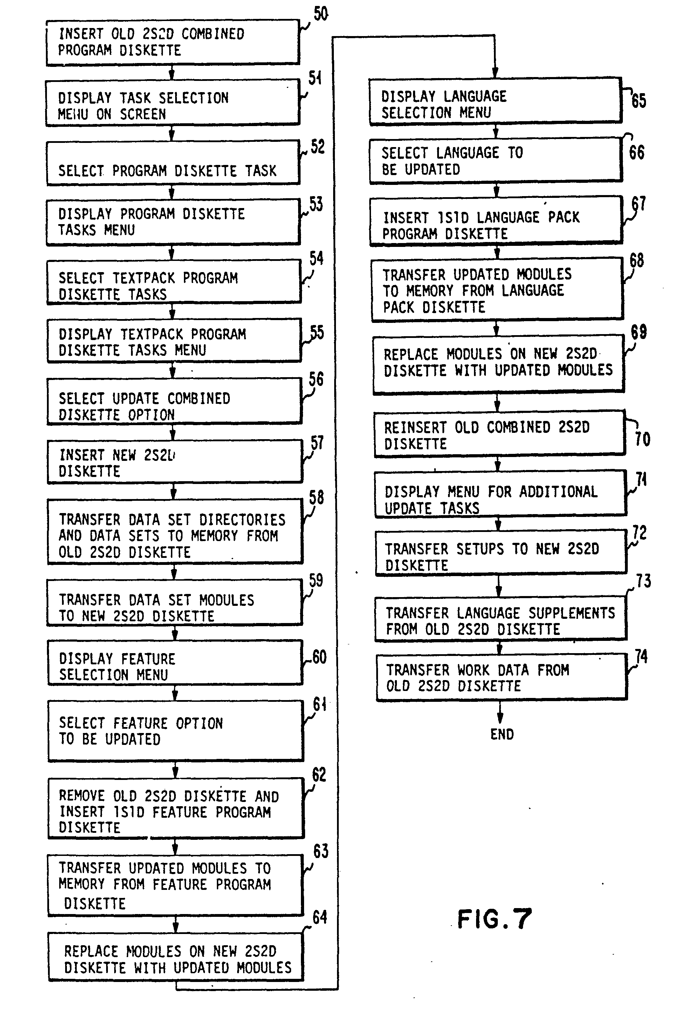

With reference to Fig. 7 after insertion of the old 2S2D combined program diskette (step 50) the process, therefore, begins by reading in the old 2S2D program diskette, displaying the initial task selection menu 1 (step 51) from which the operator selects option c, i.e., program diskette tasks (step 52), and has presented on the screen (step 53) the program diskette task menu from which the operator selects option a, i.e., textpack program diskette tasks (step 54), and has presented on the screen the textpack program diskette task menu 4 (step 55). The operator selects option k from menu 4, namely, Update Combine Program Diskette task (step 56), which after insertion of a new 2S2D diskette (step 57), causes the combine program task set stored on the 2S2D diskette to be transferred into memory (step 58). The combine program task set includes the necessary subroutines to cause the system to create the new 2S2D diskette from the old 2S2D diskette and the new 1S1D updated feature program diskette.

If the operator has not previously inserted a new factory initialized 2S2D blank diskette into the other diskette drive 14R, the system prompts the operator for that action and then checks to insure that an appropriate program diskette has been loaded. The volume table of contents corresponding to the old 2S2D diskette is transferred to the new 2S2D diskette. As discussed previously, the VTOC includes a 2-byte pointer to each data set directory. Therefore, the system determines the physical block number of data set 0 directory, and this is transferred into the memory from the old 2S2D diskette. However, the physical block numbers, as stored in memory, will be different because the contents of the directory are employed by the update program to transfer to the new 2S2D diskette in sequential order of all modules assigned to data set 0 on the old 2S2D diskette. Those modules assigned to data set 0 are recorded in sequential blocks on the new 2S2D diskette and the starting block number of each module is computed and stored in the data set directory 0 in memory for the 2S2D updated diskette.

The next step of the process is to transfer the remaining data set directories to memory and the program modules assigned thereto in sequential order from the old combine diskette to the new combine diskette.

After all the data set directions have been updated in memory and their respectively identified programming modules have been transferred to the new 2S2D diskette (step 59), the system displays the feature menu (step 60) which has been dynamically created.  ·

| XXXXXX | YYYYYY | | | | | Kyb 1 | |
|---|---|---|---|---|---|---|---|

### COMBINE FEATURE SELECTION

| ID | ITEM | CHOICE | CHOICES |
|---|---|---|---|
| a | Asynchronous Feature | 2 | 1=From Diskette Type 1<br>2=Do Not Combine |
| b | Binary Synchronous Feature | 2 | 1=From Diskette Type 1<br>2=Retain from 2D |
| c | Filepack Feature | 2 | 1=From Diskette Type 1<br>2=Retain from 2D |
| d | Mag Card Feature | 2 | 1=From Diskette Type 1<br>2=Do Not Combine |
| e | SNA Feature | 2 | 1=From Diskette Type 1<br>2=Do Not Combine |

When finished with this menu, press ENTER.
Type ID letter to choose ITEM; press ENTER: (Prompt Line)
(Message Line)

### MENU 6

When the operator selects the feature (step 61), the system prompts the operator to insert the newly received 1S1D diskette containing the feature program (step 62) corresponding to the option selected on the feature menu.

The displayed feature menu is similar to Menu 6 shown above where all potential system features are listed. The operator is given two possible choices, i.e., #1 or #2. The first choice, #1 "From Diskette Type 1" is selected by the operator when the corresponding feature program is to be updated. The default choice is #2. Choice #2 is either "Do Not Combine" or "Retain from 2D", depending on whether the feature program is stored on the 2S2D diskette. Choice #1, of course, will only be selected by the operator when Choice #2 indicates that the feature program is, in fact, stored on the disk and is to be replaced (updated) from the 1S1D diskette.

The term "update" as used in the present description is limited to the situation where the update involves replacing one program module with another module having the same 16-bit designation. However, the build number as recorded in the last portion of the data set directory for the updated module will be greater than the previous build number, as shown in Fig. 5.

Since the data set directories for the newly issued 1S1D feature program will identify the programming modules by data set number, module number, and build number, a comparison is made to determine what program modules in each data set have build numbers which are higher than the build numbers of the corresponding modules already recorded. Different criteria for a change in the build number of a module are possible provided that once established, they do not change. For example, when the new 1S1D diskette is issued, each of the programming modules on that diskette may be issued a new build number. Alternately, only those modules that have been changed are issued new build numbers while the remaining modules on the 1S1D diskette which have not been altered keep their assigned build number. When a module having a higher build number is detected, that module is then recorded over the old module if the length of the new module does not exceed the length of the old module. Otherwise, if the length is greater, the new module is recorded immediately following the last module recorded on the 2S2D diskette and its location, i.e., physical block number, is inserted in the directory in place of the old physical block number. While the old module is not erased, it will not be read since the directory no longer points to the module, but merely its replacement. Where the build numbers of corresponding modules are the same, no change is made on the new 2S2D diskette. Also, if the build number on the 2S2D diskette module is greater or the same as the build number on the 1S1D diskette module, no change is made.

After the updated modules have been transferred to memory from feature program diskette (step 63) and the modules on the new 2S2D diskette have been replaced with the updated modules (step 64). Next the following menu is employed by the operator to indicate the specific set of language modules to be updated.

# EP 0 076 950 B1

xxxxxx     yyyyyy                              Kyb 1

## COMBINE LANGUAGE SELECTION

| ID | LANGUAGE | CHOICE | CHOICES |
| --- | --- | --- | --- |
| a | U.S. English | 2 | 1=From 1D<br>2=Retain From 2D |
| b | U.K. English | 2 | 1=From 1D<br>2=Do Not Combine |
| c | German | 2 | 1=From 1D<br>2=Retain From 2D |
| . . . | | | |
| l | Norwegian | 2 | 1=From 1D<br>2=Do Not Combine |

When finished with this menu, press ENTER.
(Prompt Line)
(Message Line) ·

<div align="center">MENU 7</div>

The above menu is displayed to the operator after completion of the update of any feature programs (step 65). As with the feature menu, all potential language options have been listed and the #2 choice indicates to the operator if the particular language program has previously been transferred to the 2S2D diskette by the message "Retain From 2D".

In this instance, U.S. English and the German language programs are recorded on the 2S2D diskette. Assuming that the new 1S1D diskette is an update for the German language dictionary, then the operator changes the default option in the "Your Choice" column from #2 to #1 (step 66). The system would then prompt the operator to insert the 1S1D diskette containing the German language (step 67) and the program modules recorded thereon would be transferred to the 2S2D diskette in the same manner as described in connection with the transfer of programming modules from the feature diskette (steps 68 and 69).

After the update feature and language program modules have been transferred, the respective updated directories are recorded on the new 2S2D diskette from memory and then the system prompts the operator to reinsert the old combined 2S2D diskette (step 70) in order to transfer the information remaining on that diskette which could comprise both program setups (step 72) and language supplements (step 73) and work data (step 74) such as documents which are in various stages of processing. This latter information is merely transferred as a logical copy by the "update" program which insures that the appropriate tables on the new 2S2D diskette are updated reflecting the location on the new 2S2D diskette of this data.

If desired, the update option can be used to add a new feature or a new language to the 2S2D combine diskette that previously had not been transferred, rather than employing the create combine option (step 71).

Reference should be made to the cross-referenced application for a complete description of the operation of the system shown in Fig. 1. As described therein.

As described hereinbefore, the system can be operated from programs stored on a plurality of separate 1S1D program diskettes where, in essence, a separate text processing task is on each diskette. Alternately, the system can operate from a combined program/work diskette on which programs from the 1S1D diskettes have been selectively transferred and combined on a 2S2D type diskette, hereinafter referred to as the combined program/work diskette.

It has been already explained how various programs are combined onto the 2S2D diskette in accordance with a "Combine" program that is entered into the system from a 1S1D source diskette which, in practice, has been packaged as part of the highest version of the basic program. The "Combine" program guides the operator interactively through a sequence of menus from which selections are made, and also prompts the operator to insert and remove specifically identified 1S1D diskettes at the appropriate time so that task program sets corresponding to the tasks selected from the displayed menus will be transferred to the 2S2D destination diskette and so that the appropriate housekeeping data will also be generated by the system and stored on the 2S2D diskette so as to permit the transferred programs to be subsequently selected and entered into the system from the single 2S2D Combined program diskette.

The 2S2D Combined program diskette is also used as a work diskette since, from a practical standpoint, the subset of selected task programs for a given next processing application does, in most situations, leave considerable amount of working storage space on the 2S2D combined diskette.

In order to better understand how some menus are developed by the system, a short explanation of the menu format and functional portions will first be provided in connection with menu 1 previously shown.

The simple menu 1 has three major functional areas or fields. The first is the name field, which in this instance, contains the menu name "Task Selection". The second major area is referred to as the option area or option field and includes the data contained under ID and ITEM titles.

The last area is the information text area, for example, three lines, and instruction, a prompt line which contains the instruction "Type ID letter to choose Item; press ENTER" and a message line respectively.

The menu option area can take several forms. The parameter option form shown in menu 1 comprises at least two required columns, namely, the ID column and the item (name, task, function) column. Optional column labels are "Your Choice" and "Possible Choices". The ID column contains a one letter graphic, usually an alpha character, that is used by the operator to indicate to the system a selection of the corresponding option by typing that letter on the keyboard. The item column is strictly an information column to identify the nature of the option. The "Your Choice" column is employed in some menus and is generally employed where there are two possible choices, such as shown below:

| 1ID | Item | Your Choice | Possible Choices |
| --- | --- | --- | --- |
| g | Ring bell | 1 | 1=Yes; 2=No |

The other form of menu option is the directive option list which is used to present another menu or extend the existing menu. That format uses only two columns. Menu 1 is a typical example of this type format. Other forms of options are provided but are not pertinent to the present description.

The instruction line may contain one or more lines of text instruction or information and is followed by the prompt line.

The information that is presented on the screen of the display device of an interactive text processing system is the result of text characters being transferred from predetermined locations in the display buffer under the control of the microprocessor. The data being displayed originates either from the keyboard or from data stored on the diskette and was also transferred to the buffer under the control of the microprocessor. The transfer of menu type data from the program diskette to the display buffer is controlled by a suitable subroutine which is part of the basic system control programs that are read into the system after it has been powered on and IPLed by the appropriate disk.

The combined program diskette task menu shown hereunder as menu 8 is displayed as a result of the operator selecting option c from the task selection menu (menu 1) when the system has been IPLed from a 2S2D combined program/work diskette. The initial task selection menu that is displayed is identical to the task selection menu that is displayed as menu 1 when a system is IPLed from a 1S1D basic program diskette.

The program diskette task option is selected on the initial task selection menu by the operator when the operator wants to modify in some way either the basic programming tasks or feature programming tasks.

```
xxxxxx  yyyyyy                                    Kyb 1
```
---

COMBINED PROGRAM DISKETTE TASKS

| ID | ITEM |
| --- | --- |
| a | Textpack Program Diskette Tasks |
| b | 'first combined feature PDT' |
| c | 'second combined feature PDT' |
| d | Other feature Program Diskette Tasks |
| e | Go to Task Selection |

Type ID letter to choose ITEM; press ENTER=

MENU 8

If option a is selected by the operator from the menu, the following menu is displayed.

16

iPRODSK                                                    Kyb 1
_____ _____  _____ _____

### TEXTPACK PROGRAM DISKETTE TASKS

ID   ITEM
_____

a    Change Document Format Defaults
b    Change Alternate Format Defaults
c    Change Printer Description
d    Change Work Station Description

e    Duplicate Machine Setup
f    Duplicate Program Diskette
g    Erase Program Diskette
h    Duplicate Spelling Supplement
i    Change Arithmetic Format Defaults
j    Create New Combined Program Diskette
k    Update Combined Program Diskette

l    Go to Task Selection

When finished with this menu, press ENTER.
Type ID letter to choose ITEM; press ENTER:
(Message Line)

### MENU 4

If option b, on the other hand, is selected by the operator from the menu 8, then the feature program diskette task menu unique to that feature which is selected is displayed, the data for which originated on the 1S1D feature program diskette and which was transferred to the 2S2D combined program diskette during the creation of that diskette.

If option c is selected by the operator from the menu 8, than similarly a feature program diskette task menu unique to that feature is displayed as with option b.

Whatever program diskette task option is selected from each of these menus, the sytem proceeds to execute that task.

The menu 8, includes an option labelled d which provides a vehicle for the operator to insert a 1S1D feature diskette into the system at this point in the event the feature was not combined on the 2S2D diskette.

The combine program also includes a specific subroutine for developing an additional menu which is shown as menu 9 hereunder and which is unique to the 2S2D combined program diskette.

xxxxxx  yyyyyy                                            kyb 1
_____

### FEATURE TASKS

ID   ITEM
_____

a    'first combined feature'
b    'second combined feature'
c    Other Feature

d    Go to Task Selection

Type ID letter to choose ITEM; press ENTER;

### MENU 9

The menus 8 and 9 are generated by the system dynamically when an option from a prior menu is selected using the table entries stored during the creation of the 2S2D combined program diskette in accordance with the data that is entered interactively into the system by the operator and data that is transferred to the system from the various 1S1D diskettes involved in the combined operation.

The menu 9 is displayed in response to the operator selecting option e, "feature tasks", on the menu 1.

While the information that is displayed on each specific menu could be stored together in memory and transferred to the display buffer as a complete entity, it is generally more efficient from a memory storage standpoint to build each menu from a group of tables since a number of menus uses the same phrases and

17

vice versa. The use of tables also allows additions and changes to be made with a minimum adverse effect on other areas of the system.

The menu 8 is displayed to the operator when option c is selected from the task selection menu. Menu 8 is developed and displayed in a manner similar to the other menus in that the various entries, such as the title, ID characters, and item descriptions are transferred from various tables in memory where the literal text is actually stored. The literal text shown as option a in menu 8 is a menu name which appears in a table of menu names. The program which develops this menu transfers the literal text from the table to the display buffer where it appears as option a.

The description of options b and c in menu 8 do not actually appear on the menu. These two lines are actually the only part of menu 8 which changes in accordance with what programs have been previously combined on the 2S2D combined program diskette. In practice, the list of menu names that are stored on the 2S2D combined program diskette does include the text that will appear as options b and c on menu 8. The address of these menu names in the menu name table are supplied to the control block for this menu when the menu is to be displayed. The literal text for options d and e in menu 8 does not change. However, the ID numbers for these options will vary depending on the number of feature programs that have been previously combined. Therefore, these ID numbers will be assigned dynamically under program control for each combined program/work diskette as it is created dynamically.

The function of menu 8 is to permit the operator to select the feature program diskette task menu that will be displayed as if the system was operated under the control of a 1S1D feature program diskette. In other words, selection of options b or c on menu 8 results in menus being displayed that are exactly the same as the respective feature program diskette task menus that would be displayed from the 1S1D feature program diskette.

The function of menu 9 is to permit the operator to select one of the combined feature task menus for display so that the operator can select the displayed options from the menu as if the feature task menu had been displayed from a 1S1D feature program diskette.

Two menus 6 and 10 are shown hereunder.

xxxxxx   yyyyyy                                          Kyb 1

---

### COMBINE FEATURE SELECTION

| ID | ITEM | YOUR CHOICE | POSSIBLE CHOICES |
|---|---|---|---|
| a | Asynchronous Feature | 2 | 1=From Diskette Type 1<br>2=Do Not Combine |
| b | Binary Synchronous Feature | 2 | 1=From Diskette Type 1<br>2=Retain from 2D |
| c | Filepack Feature | 2 | 1=From Diskette Type 1<br>2=Retain from 2D |
| d | Mag Card Feature | 2 | 1=From Diskette Type 1<br>2=Do not Combine |
| e | SNA Feature | 2 | !=From Diskette Type 1 |

When finished with this menu, press ENTER
Type ID letter to choose ITEM; press ENTER

MENU 6

18

xxxxxx  yyyyyy                                                      Kyb 1

COMBINE LANGUAGE SELECTION

| ID | ITEM | YOUR CHOICE | POSSIBLE CHOICES |
|---|---|---|---|
| a | U.S. English | 2 | 1=Languagepack<br>2='second choice' |
| b | U.K. English | 2 | 1=Languagepack<br>2='second choice' |
| c | German | 2 | 1=Languagepack<br>2='second choice' |
| d | Dutch | 2 | 1=Languagepack<br>2='second choice' |
| e | National French | 2 | 1=Languagepack<br>2='second choice' |
| f | Canadian French | 2 | 1=Languagepack<br>2='second choice' |
| g | Italian | 2 | 1=Languagepack<br>2='second choice' |
| h | Spanish | 2 | 1=Languagepack<br>2='second choice' |
| i | Swedish | 2 | 1=Languagepack<br>2='second choice' |
| j | Finnish | 2 | 1=Languagepack<br>2='second choice' |
| k | Danish | 2 | 1=Languagepack<br>2='second choice' |
| l | Norwegian | 2 | 1=Languagepack<br>2='second choice' |

When finished with this menu, press ENTER.
Type ID letter to choose ITEM; ENTER.

MENU 10

The menus 6 and 10 are also created on a dynamic basis during the creation of the 2S2D program/work diskette. These menus are displayed only during the "update" task. The combine feature selection menu shown as menu 6 is displayed in response to the operator having first selected option c on a task selection menu, i.e., program diskette tasks, and then selecting the update combined program option k from the basic or textpack program diskette task menu (menu 4). The menu 6 lists all features that are available to the system. The portion of menu 6 that is dynamically created involves the possible choices column, and more specifically, the "second choice" text. The text "second choice" is not actually displayed but instead, one or two literal text messages are displayed. The first message is "Retain from 2D" which is an indication that the corresponding program is on the 2S2D dikette. The second message is "Do Not Combine" which is an indication that the feature was never transferred to the 2S2D diskette. The choice as to which message is displayed is based on information that is created during the creation of the 2S2D diskette as to the features that are transferred to the 2S2D diskette. The menu is developed based on that data.

Menu 10 is displayed immediately after the menu 6 when the system is in an update mode and, again, is unique to the update task. The function of menu 10 is to display to the operator those language dictionaries that have been combined on the 2S2D diskette. This is accomplished in the identical manner as in the menu 6 where the second choice column displays the "Retain from 2D" message when the language dictionary is present on the 2S2D diskette or "Do Not Combine" message when the language dictionary has not been previously combined on the 2S2D diskette.

EP 0 076 950 B1

In summary, the method of the present invention contemplates the creation of menus on a dynamic basis in order to assist the operator in the interactive selection of processing tasks from a combined program/work diskette. In one instance, menus are provided to assist the operator during the task of updating a program stored on a combined program diskette. In the second instance, menus are developed dynamically to assist the operator in selecting tasks that are stored on the combined program diskette. Both sets of menus result in increased operator efficiency and system throughput.

We have seen that it is desirable to have a single 2S2D combined program/work diskette in order to avoid the insertion and removal of 1S1D diskettes each containing a program task set required by the system. The problem involved in using the combined program/work diskette with menus which do not reflect which program sets were combined on the 2S2D combined program/work diskette is solved to assist the operator in the task selection process, by displaying to the operator a menu that the system developed on a dynamic basis during the creation of the combined diskette, which menu reflected those "feature" program sets that had been transferred to the 2S2D program/work diskette. The menu that reflects the contents of the features combined on the 2S2D program diskette was shown as menu 8. This menu is presented in response to the operator selecting option c "Program Diskette Task" from the initial task selection Menu 1.

The menu 8 lists those feature programs that exist on the combined diskette along with an option d designated "Other Feature Program Diskette Tasks".

Menu 9 also indicates those features that are stored on the 2S2D combined diskette. The menu 9 is displayed in response to the operator's selection of option e, feature tasks from the initial task selection menu. Menu 9 also lists an option c entitled "Other Feature". The "other" options provided on the program diskette task menu and the feature task menu are the vehicles which permit the system to instruct the operator what to do in the event that the desired feature program was not transferred from the 1S1D diskette to the 2S2D combined program/work diskette.

The operator selects the "other" option from either menu after realizing that the desired feature is not on the 2S2D combined program/work diskette. The system's response is to prompt the operator to insert the desired 1S1D feature diskette by displaying the message INSERT DESIRED FEATURE DISKETTES PRESS ENTER.

After the operator inserts the desired 1S1D feature diskette and presses the ENTER key, the system insures a valid feature diskette has been inserted and, if it is not, then the system displays the following message if the other option was selected from menu 8, "No Diskettes with Valid Program Diskette Tasks Found". If the prior option was selected from menu 9, then the following message is displayed, "No Feature Diskette was Found". If a valid feature diskette has been inserted, then the system proceeds to transfer the feature program set into the system.

The operator proceeds to execute the desired feature tasks and, when finished, the task selection menu 1 is displayed by the system.

The above description was directed to the situation where the operator desired to have the system perform a "feature" task whose corresponding program is not on the combined 2S2D program/work diskette. A similar situation occurs when the operator selects the spelling task from the task selection menu that is displayed by the 2S2D diskette. The language menu that the system created dynamically during the creation of the 2S2D combined program/work diskette, in addition to listing the languages that are on the combined diskette, also provides the "other" option which, if selected, displays the complete language menu to the operator, permitting the operator to relate to the system the desired language and the system to solicit from the operator on the prompt line the appropriate designation or description of the 1S1D diskette that will be inserted.

The operation of the system proceeds as was described in connection with the insertion of the 1S1D feature diskette. While the invention has been particularly shown and described with reference to a preferred embodiment thereof, it will be understood by those skilled in the art that various other changes by equivalent means or steps may be made such as for example using different Input/Output devices for display or Input of data without departing from the scope of the invention as defined by the claims.

**Claims**

1. In an operator controlled interactive text processing system having a keyboard, a display device, and a diskette drive for interactively entering programs into said system from a plurality of program source diskettes that are inserted individually into said diskette drive, said system performing text processing tasks that are selected by said operator interactively from menus which are displayed by said system to said operator from portions of said entered programs where said operator is required to insert said plurality of program source diskettes individually into said diskette drive whenever the desired text processing task to be performed by said operator requires a set of text processing task programs stored on different ones of said program source diskettes, a method characterized in that

selected ones of said set of text processing task programs initially stored on said plurality of different program source diskettes are combined onto one destination diskette to avoid said operator inserting and removing said plurality of program source diskettes into and from said diskette drive each time said operator controls said system to execute said set of selected text processing task programs,

20

# EP 0 076 950 B1

said method further comprising the steps of

entering into said system a "combine" program and executing said "combine" program to cause said system to combine, on said destination diskette, text processing task programs from each of said separate program source diskettes that are selected in accordance with selection data that is entered into said system interactively by said operator in response to displayed menus which are entered into said system as part of said "combine" program and which display identifiable options corresponding to said text processing programs to be transferred to said destination diskette,

entering said selection data into said system when said menus are displayed,

transferring a basic text processing task program and said "combine" program to said destination diskette as a logical copy prior to transferring any other said program to said destination diskette, said step of transferring the basic text processing task program as a logical copy including transferring a plurality of programming modules, each of which has been assigned to only one of plurality of data sets, and transferring a corresponding plurality of data set directories, each of which define the location of said destination diskette of the start of each transferred said module associated with said data set along with the length of said transferred module,

transferring feature programming modules from a feature program source diskette containing a selected feature program to said destination diskette, said feature programming module transfer step including first, transferring the said feature programming modules from said feature program source diskette to said destination diskette beginning with program modules which are assigned to the lowest order data sets while updating the corresponding said data set directories stored in said system and allocating space on said destination diskette for a new data set directory immediately following any feature programming modules previously transferred to said destination diskette, and recording all of said transferred feature programming modules for that data set following said allocated space, and transferring to said destination diskette each said program identified to said system by said selection data.

2. The method recited in claim 1 further including the step of transferring other non-program type information from at least one of said program source diskettes to said one destination diskette in accordance with other selection data that is entered into said system interactively by said operator in response to said displayed menus.

3. Method according to claim 2 in which said program source diskettes store said text processing task programs only on one side S1 at a bit density D1 and said transfer step transfers said text processing task programs and said non-program type information to both sides S2 of said destination diskette at a bit density D2 which is approximately twice the bit density D1.

4. Method according to any one of claims 1 to 3 in which said text processing task programs that are combined on said destination diskette further include an IPL program, a first plurality of feature programs, and a second plurality of spell-check programs for checking the correct spelling of words.

5. Method according to any one of claims 2 to 4 in which said step of transferring said non-program information includes transferring operator entered data that has been recorded on said at least one program source diskette as "setup" data and supplementary dictionaries.

6. The method according to any one of claims 1 to 5 in which each said transferred data set directory is recorded on said destination diskette immediately preceding said programming modules assigned to said data set.

7. The method according to claim 6 in which said step of transferring data set directories only transfers a said directory from said program source diskette if there is at least one programming module assigned to said corresponding data set.

8. The method according to any one of claims 1 to 7 further including the step of transferring selected language modules and dictionaries from one of said program source diskettes to said destination diskette, said language module transfer step including first, transferring in data set order said language programming modules assigned to data sets having data set directories previously transferred to said destination diskette, allocating other data set directory space on said destination diskette, and transferring any remaining language programming modules to said destination diskette immediately following said other directory space.

9. The method according to any one of claims 1 to 8 further including the step of displaying to said operator predefined messages advising said operator when to remove and insert each said separate program source diskette.

10. The method according to any one of claims 1 to 9 further including the step of transferring any data set directory stored in said system to said previously allocated space on said destination diskette.

**Patentansprüche**

1. Methode, eingefügt in ein Operator-gesteuertes, im Dialogverkehr arbeitendes Textverarbeitungssystem, zu dem eine Tastatur, eine Darstellungsvorrichtung und eine Disketteneinheit gehören, um im Dialog Programme, die von einer Vielzahl vom Programm-Source-Disketten stammen und einzeln in die genannte Disketteneinheit eingelesen werden, in das genannte System einzugeben, wobei dieses System Textverarbeitungsaufgaben durchführt, die vom genannten Operator im Dialog aus Menüs

21

ausgewählt werden, die ihm vom genannten System aus Anteilen der genannten eingegebenen Programme dargestellt werden, und der genannte Operator aufgefordert wird, die genannte Vielzahl von Programm-Source-Disketten einzeln in die genannte Disketteneinheit einzuführen, wenn die vom Operator gewünschte Textverarbeitungsaufgabe einen Satz von auf verschliedenen Programm-Source-Disketten gespeicherten Textverarbeitungsprogrammen benötigt, und die Methode dadurch gekennzeichnet ist, dass:

Disketten, die aus dem genannten, ursprünglich auf der genannten Vielzahl von verschiedenen Programm-Source-Disketten gespeicherten Satz Textverarbeitungsprogramme gewählt wurden, zu einer Bestimmungsdiskette kombiniert werden, um zu vermeiden, dass der genannte Operator eine Vielzahl von Programm-Source-Disketten in die genannte Disketteneinheit einführt oder daraus entfernt, immer wenn er das genannte System benutzt, um den Satz der gewählten Aufgabe der Textverarbeitungsprogrammen auszuführen,

und dass die genannte Methode folgende Schritte aufweist:

Eingabe eines "Kombinier"-Programmes in das genannte System und Ausführung dieses "Kombinier"-Programmes, um Textverarbeitungs-Aufgabenprogramme von allen der genannten einzelnen Programm-Source-Disketten auf der genannten Bestimmungsdiskette zu kombinieren, wobei diese Programm-Source-Disketten nach Auswahldaten gewählt wurden, die vom genannten Operator im Dialogverkehr in das genannte System eingegebn Wurden als Antwort auf dargestellte Menüs, die als Teil des genannten "Kombinier"-Programmes in das genannte System eingelesen werden und identifizierbare Optionen darstellen, die den genannten, der genannten Bestimmungsdiskette zu übertragende Textverarbeitungsprogrammen entsprechen,

Eingabe der genannten Auswahldaten in das genannte System, wenn die genannten Menüs dargestellt werden,

Übertragung eines basischen Textverarbeitungsprogrammes und des genannten "Kombinier"-Programmes an die genannte Bestimmungsdiskette als eine logische Kopie, bevor irgendein anderes Programm dieser Bestimmungsdiskette zugeleitet wird, wobei der genannte Schritt die Übertragung des basischen Textverarbeitungsprogrammes als eine logische Kopie die Übertragung einer Vielzahl von Programmiermodulen umfasst, die jeweils immer nur einem unter einer Vielzahl von Datensätzen zugewiesen wurden und Übertragung einer entsprechenden Vielzahl von Datensatzanweisungen, die jeweils die Disketten-Position des Beginns jedes genannten übertragenen Moduls definiert, das mit dem genannten Datensatz verbunden ist, sowie die Länge des genannten übertragenen Moduls,

Übertragung von Merkmalprogrammiermodulen aus einer Merkmalprogramm-Sourcediskette, die ein gewähltes Merkmalprogramm, enthält, an die genannte Bestimmungskassette, wobei der genannte Übertragungsschritt des Merkmalprogrammiermoduls zuerst die Übermittlung der genannten Merkmalprogrammiermodule aus der genannten Merkmalprogramm-Sourcediskette an die genannte Bestimmungsdiskette enthält und mit Programm-Modulen beginnt, die den niedrigsten Befehlsdatensätzen zugeordnet sind, während die entsprechenden, im genannten System gespeicherten Datensatzverzeichnisse aktualisiert werden, und einem neuen Datensatzverzeichnis, das sofort jedem vorher an die genannte Bestimmungsdiskette übertragenen Merkmalprogrammiermodul einen Platz auf der genannten Bestimmungsdiskette anweist, sowie Dokumentierung aller genannten übertragenen Merkmalprogrammiermodule für den Datensatz, der dem genannten zugeteilten Platz folgt, und

Übertragung des jeweils durch die genannten Auswahldaten als zum System gehörend identifizierten Programms an die Bestimmungsdiskette.

2. Methode nach Anspruch 1, zu der weiterhin der Schritt der Übertragung anderer Informationen gehört, deren Natur nicht dem Programm entspricht, von zumindest einer der genannten Programm-Sourcedisketten an die genannte Bestimmungsdiskette, u.z. in Übereinstimmung mit anderen Auswahldaten, die vom genannten Operator im Dialogverkehr in Beantwortung der genannten dargestellten Menüs in das genannte System eingegeben werden.

3. Methode nach Anspruch 2, bei der die genannten Programm-Sourcedisketten die genannten Textverarbeitungsprogramme nur auf einer ihrer Seiten (S1) mit einer Bit-Dichte D1 speichern und der genannte Übergabeschritt die genannten Textverarbeitungsaufgebenprogramme sowie die genannten, ihrer Natur nach nicht dem Programm entsprechenden Informationen auf beiden Seiten S2 der genannten Bestimmungsdiskette speichert mit einer Bit-Dichte von D2, d.h. etwa zweimal die Bit-Dichte D1.

4. Methode nach allen der Ansprüche 1 bis 3, bei der die genannten Textverarbeitungsaufgabenprogramme, die auf der Bestimmungsdiskette kombiniert werden, des weiteren ein IPL-Programm, eine erste Vielzahl von Merkmalprogrammen und eine zweite Vielzahl von Buchstabier-Prüfprogrammen umfassen, um das richtige Buchstabieren der Worte zu überprüfen.

5. Methode nach allen der Ansprüche 2 bis 4, bei der der genannte Übergabeschritt von ihrer Natur nach nicht dem Programm entsprechenden Informationen die Übergabe von Daten beinhaltet, die vom Operator eingegeben wurden und zumindest auf einer Programm-Source-Diskette als "Vorbereitungs"-Daten und zusätzliche Verzeichnisse dokumentiert wurden.

6. Methode nach allen der Ansprüche 1 bis 5, bei der jede der genannten übertragenen Datensatzverzeichnisse auf der genannten Bestimmungsdiskette registriert wird, die gerade vor den genannten, dem betroffenen Datensatz zugeordneten Programmiermodulen angeordnet ist.

7. Methode nach Anspruch 6, bei der der genannte Schritt der Datensatzverzeichnisübertragung nur dann ein Verzeichnis aus der genannten Programm-Sourcediskette nur dann überträgt, wenn zumindest ein dem genannten Datensatz zugeordnetes Programmiermodul ansteht.

8. Methode nach allen der Ansprüche 1 bis 7, die im weiteren einen Schritt umfasst, bei dem ausgewählte Sprachmodule und Wörterverzeichnisse von einer der genannten Programm-Source-Disketten auf die genannte Bestimmungsdiskette übertragen werden, wobei dieser Sprachenmodul-Übertragungsschritt erste, die Übermittlung in Datensatzorder betreffende genannte Sprachenprogrammiermodule aufweist, die Datensätzen mit vorher an die Bestimmungsdiskette übertragenen Datensatzverzeichnissen zugeordnet wurden, anderen Datensatzverzeichnisraum auf der genannten Bestimmungsdiskette aufweist und übriggebliebene Sprachprogrammiermodule der Bestimmungsdiskette überträgt, die dem genannten anderen Verzeichnisraum ohne Unterbrechung folgt.

9. Methode nach allen der Ansprüche 1 bis 8, die weiterhin einen Schritt aufweist, in dem dem genannten Operator vordefinierte Meldungen dargestellt werden, um ihn jeweils zu benachrichtigen, wenn er die genannte, getrennte Programm-Source-Diskette einsetzen oder entfernen muss.

10. Methode nach allen der Ansprüche 1 bis 9, die weiterhin einen Schritt aufweist, bei dem ein eventuell im genannten System gespeichertes Datensatzverzeichnis dem genannten, vorher zugewiesenen Platz auf der genannten Bestimmungsdiskette übertragen wird.

**Revendications**

1. Dans un système interactif de traitement de texte commandé par l'opérateur et comportant un clavier, un dispositif d'affichage et une unité de disquettes pour introduire des programmes de façon interactive dans ledit système depuis une pluralité de disquettes de programme source qui sont insérées individuellement dans ladite unité de disquettes, ledit système exécutant des tâches de traitement de texte choisies de façon interactive par ledit opérateur à partir de menus affichés à son intention par ledit système depuis des parties desdits programmes, l'opérateur devant insérer séparément les disquettes de ladite pluralité de disquettes de programme source dans ladite unité de disquettes chaque fois que la tâche de traitement de texte désirée qu'il doit exécuter fait appel à une ensemble de programmes de traitement de texte enregistrés sur différentes disquettes de programme source, un procédé caractérisé en ce que: des programmes sélectionnés faisant partie dudit ensemble de programmes de traitement de texte initialement enregistrés sur les différentes disquettes de ladite pluralité de disquettes de programme source sont combinés sur une disquette de destination pour éviter audit opérateur d'avoir à insérer ladite pluralité de disquettes dans ladite unité de disquettes et à la retirer de celle-ci chaque fois qu'il commande l'exécution par ledit système dudit ensemble de programmes sélectionnés de traitement de texte, ledit procédé comprenant des étapes consistant à:
introduire dans ledit système un programme dit de "combinaison" et l'exécuter afin que le système combine, sur ladite disquette de destination, des programmes de traitement de texte depuis chacune desdites disquettes de programme source qui sont sélectionnéés en fonction de données de sélection introduites dans ledit système de façon interactive par ledit opérateur en réponse aux menus affichés qui sont introduits dans ledit système en tant que partie dudit programme de "combinaison" et qui affichent des options identifiables correspondant auxdits programmes de traitement de texte à transférer à ladite disquette de destination,
introduire lesdites données de sélection dans ledit système quand lesdits menus sont affichés,
transférer un programme de base de traitement de texte et ledit programme de "combinaison" à ladite disquette de destination en tant que copie logique avant de transférer n'importe quel autre desdits programmes à cette disquette, ladite étape de transfert dudit programme de base en tant que copie logique comprenant le transfert d'une pluralité de modules de programmation dont chacun a été affecté à un seul d'une pluralité d'ensembles de données et le transfert d'une pluralité correspondante de répertoires d'ensembles de données, chacun desdits répertoires définissant l'emplacement, sur ladite disquette de destination, du début de chacun desdits modules transférés associés audit ensemble de données ainsi que la longueur dudit module transféré,
transférer des modules de programmation de fonctions, d'une disquette de programme source de fonctions contenant un programme de fonctions sélectionné à ladite disquette de destination, ladite étape de transfert de modules de programmation de fonctions comprenant d'abord le transfert desdits modules, de ladite disquette de programme source de fonctions à ladite disquette de destination en commençant par les modules de programme affectés aux ensembles de données d'ordre le moins élevé tout en mettant à jour lesdits répertoires d'ensembles de données stockés dans ledit système et l'attribution, sur ladite disquette de destination, d'espace pour un nouveau répertoire d'ensembles de données immédiatement après tous les modules de programmation de fonctions précédemment transférés à ladite disquette de destination, et l'enregistrement de tous lesdits modules de programmation de fonctions transférés relatifs à cet ensemble de données à la suite dudit espace ainsi attribué, et
transférer à ladite disquette de destination chacun desdits programmes identifiés à l'intention dudit système par lesdites données de sélection.

2. Procédé selon la revendication 1, comprenant en outre une étape de transfert d'autres informations ne faisant pas partie du programme lui-même, de l'une au moins desdites disquettes de programme

## EP 0 076 950 B1

source à ladite disquette de destination en fonction d'autres données de sélection introduites dans ledit système de façon interactive par ledit opérateur en réponse auxdits menus affichés.

3. Procédé selon la revendication 2, dans lequel lesdits programmes de traitement de texte sont enregistrés sur une seule face S1 desdites disquettes de programme source, et à une densité de bits D1, et dans lequel, lors de ladite étape de transfert, lesdits programmes de traitement de texte et lesdites informations qui ne font pas partie du programme lui-même sont transférés aux deux faces S2 de ladite disquette de destination et ce, à une densité de bits D2 qui est approximatement égale au double de la densité de bits D1.

4. Procédé selon l'une quelconque des revendications 1 à 3, dans lequel lesdits programmes de traitement de texte qui sont combinés sur ladite disquette de destination comprennent en outre un programme dit de chargement initial (IPL), une première pluralité de programmes de fonctions et une seconde pluralité de programmes de vérification de l'orthogonale des mots.

5. Procédé selon l'une quelconque des revendications 2 à 4, dans lequel ladite étape de transfert desdites informations ne faisant par partie du programme lui-même comprend le transfert de données introduites par l'opérateur qui ont été enregistrées au moins sur ladite disquette de programme source en tant que données dites de forme initiale et en tant que dictionnaires supplémentaires.

6. Procédé selon l'une quelconque des revendications 1 à 5, dans lequel chacun desdits répertoires d'ensembles de données transféré est enregistré sur ladite disquette de destination immédiatement avant lesdits modules de programmation affectés audit ensemble de données.

7. Procédé selon la revendication 6, dans lequel ladite étape de transfert de répertoires d'ensembles de données concerne seulement le transfert de l'un desdits répertoires depuis ladite disquette de programme source si au moins un module de programmation a été affecté audit ensemble de données correspondant.

8. Procédé selon l'une quelconque des revendications 1 à 7, comprenant en outre une étape de transfert de modules de langage et de dictionnaires sélectionnés, de l'une desdites disquettes de programme source à ladite disquette de destination, ladite étape de transfert de modules de langage comprenant d'abord le transfert, par ordre d'ensembles de données, desdits modules de programmation de langage affectés aux ensembles de données dont les répertoires ont précédemment été transférés à ladite disquette de destination, l'attribution sur cette dernière d'un autre espace pour un répertoire d'ensembles de données et le fransfert de tous les modules de programmation de langage restants à ladite disquette de destination immédiatement après ledit autre espace.

9. Procédé selon l'une quelconque des revendications 1 à 8, comprenant en outre une étape d'affichage à l'intention dudit opérateur de messages prédéterminés lui indiquant à quel moment il convient de retirer et d'insérer chacune desdites disquettes de programme source distinctes.

10. Procédé selon l'une quelconque des revendications 1 à 9, comprenant en outre une étape de transfert de tout répertoire d'ensembles de données emmagasiné dans ledit système audit espace précédemment attribué sur ladite disquette de destination.

FIG. 1

FIG. 2

INDEX

| 1 | 2 | 3 | 7 | 8 | 9 | 26 |
|---|---|---|---|---|---|---|
| IPL | IML | | VOL ID | HOR I | | |

TRACK 0

|←——— 128 BYTES ———→|

RECORD 7

| BYTE POSITION | FIELD NAME | LENGTH |
|---|---|---|
| 000 | LABEL I.D. | 3 |
| 003 | LABEL NO. | 1 |
| 004 | VOL. I.D. | 6 |
| 010 | ACCESSIBILITY CODE | 1 |
| . | | |
| . | | |
| 079 | LABEL STD VER | 1 |
| 080 | RESERVED | 48 |

RECORD 8

| BYTE POSITION | FIELD NAME | LENGTH |
|---|---|---|
| 000 | L+DR | 3 |
| 003 | LABEL # (1) | 1 |
| 004 | RESERVED | 1 |
| 005 | DATA SET ID | 17 |
| . | | |
| . | | |
| 028 | BEGIN OF EXTENT | 5 (CCHHR) |
| . | POINTS TO VTOC | |
| . | | |
| 034 | END OF EXTENT | 5 (CCHHR) |
| . | | |
| . | | |
| 042 | WRITE PROTECT | 1 |
| 043 | EXCHANGE TYPE | 1 |
| . | | |
| 066 | EXP. DATE | 6 |
| . | | |
| 074 | END OF DATA ADDR. | 5 |
| . | | |
| 127 | ------------------ | 1 |

*ONLY FIRST 8 ARE USED.

FIG. 3

2

EP 0 076 950 B1

CCHHR
(FROM TRACK 0, RECORD 7, FIELD 028-033)

CCHHR
(FROM TRACK 0, RECORD 7, FIELD 034-038)

TRACK "N"    |    | VTOC |    |

48 BYTES

0                                    2

PROGRAM DISKETTE VERSION NUMBER

PROGRAM DISKETTE CREATION TIME OF DAY
(USED TO FURTHER IDENTIFY COMBINE
PROGRAM DISKETTES)

PHYSICAL BLOCK NUMBER OF THE VTOC

DATASET WRITE-IN-PROGRESS
STATUS BITS

PHYSICAL BLOCK NUMBER OF LAST SECTOR
OF PROGRAM DATA ON DISKETTE

PHYSICAL BLOCK NUMBER OF LAST SECTOR
ALLOCATED TO PROGRAM AREA ON THE
PROGRAM DISKETTE (THE REMAINDER OF
THE DISKETTE IS A DATA DISKETTE)

PHYSICAL BLOCK NUMBER OF PROGRAM
DATA SET DIRECTORY FOR DATA SET 0

PHYSICAL BLOCK NUMBER OF PROGRAM
DATA SET DIRECTORY FOR DATA SET 1

— — — — — —

PHYSICAL BLOCK NUMBER OF PROGRAM
DATA SET DIRECTORY FOR DATA SET 15

**FIG. 4**

3

| LENGTH OF DIRECTORY (IN BYTES) | MAX. MODULE # FOR DATA | RESERVED | RESERVED | RESERVED |
|---|---|---|---|---|
| ATTRIBUTES OF MODULE 1 | LENGTH OF MODULE 1 (IN BYTES) | | PHYSICAL BLOCK NUMBER OF MODULE 1 | |
| | | | | |
| ATTRIBUTES OF MODULE 127 | LENGTH OF MODULE 127 (IN BYTES) | | PHYSICAL BLOCK NUMBER OF MODULE 127 | |
| BUILD NUMBER OF MODULE 1 | BUILD NUMBER OF MODULE 2 | | BUILD NUMBER OF MODULE 3 | |
| BUILD NUMBER OF MODULE 4 | BUILD NUMBER OF MODULE 5 | | BUILD NUMBER OF MODULE 6 | |
| | | | | |
| BUILD NUMBER OF MODULE 126 | BUILD NUMBER OF MODULE 127 | | RESERVED | |

FIG. 5

LOAD - - -> COMBINE MAIN — 30

INITIALIZE INIT — 31

TERMINATE TERM — 32

R/W MODULES RWMOD — 33

R/W PHY. BLK. — 34

MODULE COMPATIB. — 35

UPDATE DIRECTORY — 36

37 — FEATURE COMBINE

40 — 2S2D UPDATES

LANG. COMBINE — 41

38 — BLD FEAT/ SETUP

39 — SETUP/ SUP. I/F

UPDAT SP TBL — 42

OTHER SERVICES:

REST. OPTS. — 43

PROMPT/ MSG — 44

DISK COMP. — 45

POST MENU — 46

UP FESN — 47

## FIG. 6

INSERT OLD 2S2D COMBINED PROGRAM DISKETTE — 50

DISPLAY TASK SELECTION MENU ON SCREEN — 51

SELECT PROGRAM DISKETTE TASK — 52

DISPLAY PROGRAM DISKETTE TASKS MENU — 53

SELECT TEXTPACK PROGRAM DISKETTE TASKS — 54

DISPLAY TEXTPACK PROGRAM DISKETTE TASKS MENU — 55

SELECT UPDATE COMBINED DISKETTE OPTION — 56

INSERT NEW 2S2D DISKETTE — 57

TRANSFER DATA SET DIRECTORIES AND DATA SETS TO MEMORY FROM OLD 2S2D DISKETTE — 58

TRANSFER DATA SET MODULES TO NEW 2S2D DISKETTE — 59

DISPLAY FEATURE SELECTION MENU — 60

SELECT FEATURE OPTION TO BE UPDATED — 61

REMOVE OLD 2S2D DISKETTE AND INSERT 1S1D FEATURE PROGRAM DISKETTE — 62

TRANSFER UPDATED MODULES TO MEMORY FROM FEATURE PROGRAM DISKETTE — 63

REPLACE MODULES ON NEW 2S2D DISKETTE WITH UPDATED MODULES — 64

DISPLAY LANGUAGE SELECTION MENU — 65

SELECT LANGUAGE TO BE UPDATED — 66

INSERT 1S1D LANGUAGE PACK PROGRAM DISKETTE — 67

TRANSFER UPDATED MODULES TO MEMORY FROM LANGUAGE PACK DISKETTE — 68

REPLACE MODULES ON NEW 2S2D DISKETTE WITH UPDATED MODULES — 69

REINSERT OLD COMBINED 2S2D DISKETTE — 70

DISPLAY MENU FOR ADDITIONAL UPDATE TASKS — 71

TRANSFER SETUPS TO NEW 2S2D DISKETTE — 72

TRANSFER LANGUAGE SUPPLEMENTS FROM OLD 2S2D DISKETTE — 73

TRANSFER WORK DATA FROM OLD 2S2D DISKETTE — 74

END

FIG.7